# EUROPEAN PATENT APPLICATION

(11) **EP 2 658 275 A2**
(43) Date of publication of application: **30.10.2013**
(21) Application number: 13162356.3
(22) Date of filing: 04.04.2013
(51) Int. Cl.: H04N 21/45

(54) **Display apparatus and method for providing user interface thereof**

(30) Priority: 23.04.2012 KR 20120042215
(71) Applicant: Samsung Electronics Co., Ltd, Gyeonggi-do 443-742 (KR)
(72) Inventor: Chung, Ji-hye, Seoul (KR); Kim, Min-jin, Gyeonggi-do (KR); Lee, Bora, Seoul (KR); Lee, Hye-jeong, Seoul (KR); Kang, Seoung-soo, Gyeonggi-do (KR)
(74) Representative: Brandon, Paul Laurence

(57) **Abstract**

A display apparatus and method are provided. The display apparatus includes a display unit, a user interface (UI) generator which generates a UI to operate an executed application program, a communication unit which receives a control signal from a control device of a plurality of control devices wherein each of the plurality of control devices includes a control grade in order to select the UI; and a controller which determines whether the control device of the plurality of control devices which has transmitted the control signal has a control authority to select the UI, based on the control grade of the control device of the plurality of control devices, and operates the application program according to the control signal if the control device of the plurality of control devices has the control authority.

## Description

### CROSS-REFERENCE TO RELATED APPLICATION

This application claims priority from Korean Patent Application No. 10-2012-0042215, filed on April 23, 2012 in the Korean Intellectual Property Office, the disclosure of which is incorporated herein by reference in its entirety.

### BACKGROUND

### Field

Apparatuses and methods consistent with exemplary embodiments relate to a display apparatus and a method for providing a user interface (UI) thereof, and more particularly, to a display apparatus and a method for providing a UI thereof which enables a plurality of users to manipulate a UI displayed in the single display apparatus through their control devices, respectively.

### Description of the Related Art

A display apparatus, such as a television (TV), has evolved to utilize various types of content in addition to providing its own function of receiving and displaying a broadcasting program. Thus, a technology through which a plurality of users can share content of a display apparatus, based on such a user's control device in a home network, has been commercialized. Such technical progress encourages digital convergence and is employed in various fields regardless of the communication form, method, and type of content between the display apparatus and control devices.

In order to meet technical demands, a technology for manipulating a user interface (UI) and a function of the user interface displayed in another device by a plurality of control devices has been developed. However, current commercialized technologies do not consider performance of joint operations through several control devices at a same time, and therefore is limited in performing the joint operations for each user if services requiring various operations are utilized.

### SUMMARY

One or more exemplary embodiments provide a display apparatus and a method for providing a UI thereof which allows operations to be performed smoothly if a UI provided to a common display apparatus is shared by a plurality of control devices.

According to an aspect of an exemplary embodiment, there is provided a display apparatus including: a display unit; a UI generator which generates a UI to operate an executed application program; a communication unit which receives a control signal from one of a plurality of control devices wherein each of the plurality of control devices includes a control grade in order to select the UI; and a controller which determines whether the one of the plurality of control devices which has transmitted the control signal has a control authority to select the UI, based on the control grade of the one of the plurality of control devices, and operates the application program according to the control signal if the control device of the plurality of control devices has the control authority.

Also, the UI may include a plurality of sub UIs corresponding to a predetermined event, and the control grade comprises control authority information with respect to the plurality of sub UIs.

Also, the controller may transmit control grade information to the plurality of control devices through the communication unit if the plurality of control devices are connected to the display apparatus.

Also, the controller may transmit UI data corresponding to the control grade of each of the plurality of control devices to each of the plurality of control devices, respectively, through the communication unit.

Also, the controller may generate UI data corresponding to the control grade of each of the plurality of control devices by parsing the UI.

Also, the controller may control the display unit to display on the display unit a predetermined alarm if the control device which has transmitted the control signal does not have the control authority to select the UI.

Also, the controller may set the control grade for each of the plurality of control devices according to a connection order of each of the plurality of control devices.

Also, the controller may receive a signal for setting the control grade of a connected control device from one of the plurality of control devices and set the control grade for each of the plurality of control devices.

Also, the UI may include a common UI which is selectable by the plurality of control devices, and a private UI which is selectable by any one of the plurality of control devices.

Also, the common UI and the private UI may be displayed in different areas of the display unit.

According to an aspect of another exemplary embodiment, there is provided a method for providing a UI of a display apparatus, the method including: generating and displaying a UI which operates an executed application program; receiving a control signal from one of a plurality of control devices wherein each of the plurality of control devices includes a control grade, to select the UI; determining whether the one of the plurality of control devices which has transmitted the control signal has a control authority to select the UI, based on the control grade of the one of the plurality of control devices; and operating the application program according to the control signal if the one of the plurality of control devices has the control authority.

Also, the UI may include a plurality of sub UIs corresponding to a predetermined event, and the control grade comprises control authority information for each of the plurality of sub UIs.

Also, the method further include transmitting the control grade information to each of the plurality of the control devices.

Also, the method may further include transmitting UI data corresponding to the control grade to each of plurality of the control devices.

Also, the method may further include generating UI data corresponding to the control grade of each of the plurality of control devices by parsing the UI.

Also, the method may further include displaying a predetermined alarm if the control device which has transmitted the control signal does not have the control authority to select the UI.

Also, the display apparatus may set a control grade of each of the plurality of control devices according to a connection order of each of the plurality of control devices.

Also, the display apparatus may receive a signal to set the control grade of a connected control device from one of the plurality of control devices, and set the control grade for each of the plurality of control devices according to the signal.

Also, the UI may include a common UI which is selectable by any of the plurality of control devices, and a private UI which is selectable by only one of the plurality of control devices.

Also, the common UI and the private UI may be displayed in different areas of a display.

### BRIEF DESCRIPTION OF THE DRAWINGS

The above and/or other exemplary embodiments will become apparent and more readily appreciated from the following description of exemplary embodiments, taken in conjunction with the accompanying drawings, in which:

FIG. 1 illustrates an example of a display apparatus and a plurality of a control device.

FIG. 2 is a control block diagram of a display apparatus according to an exemplary embodiment;

FIGS. 3 and 4 illustrate an example of a UI displayed in a display unit;

FIG. 5 illustrates an exemplary embodiment including common UI areas and private UI areas of a UI;

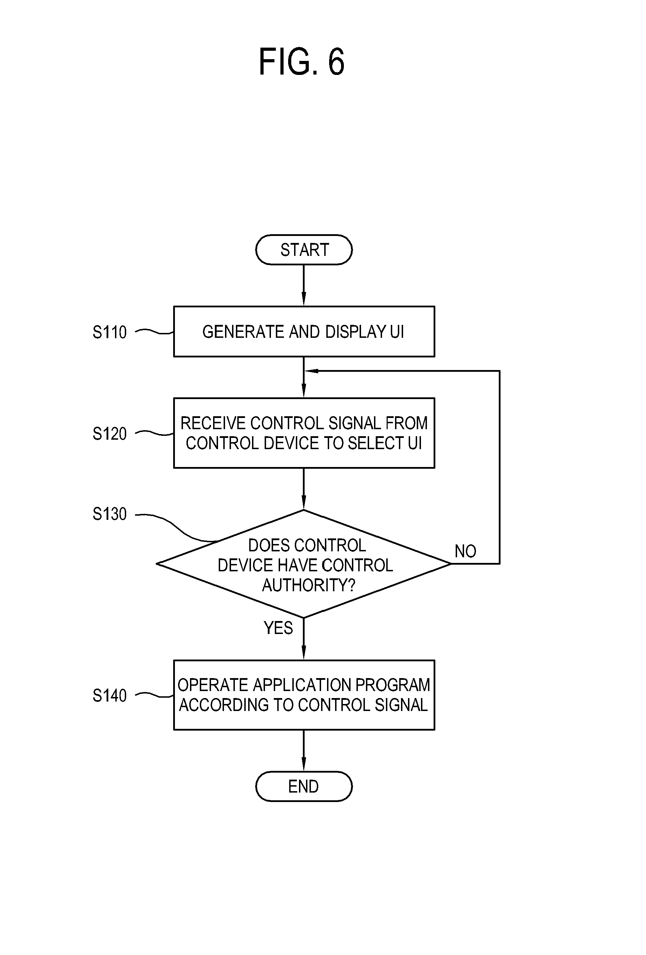

FIG. 6 is a flowchart of a method for providing a UI of the display apparatus according to an exemplary embodiment; and

FIG. 7 is a another flowchart of the method for providing a UI.

### DETAILED DESCRIPTION OF EXEMPLARY EMBODIMENTS

Exemplary embodiments will be described in detail below with reference to the accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

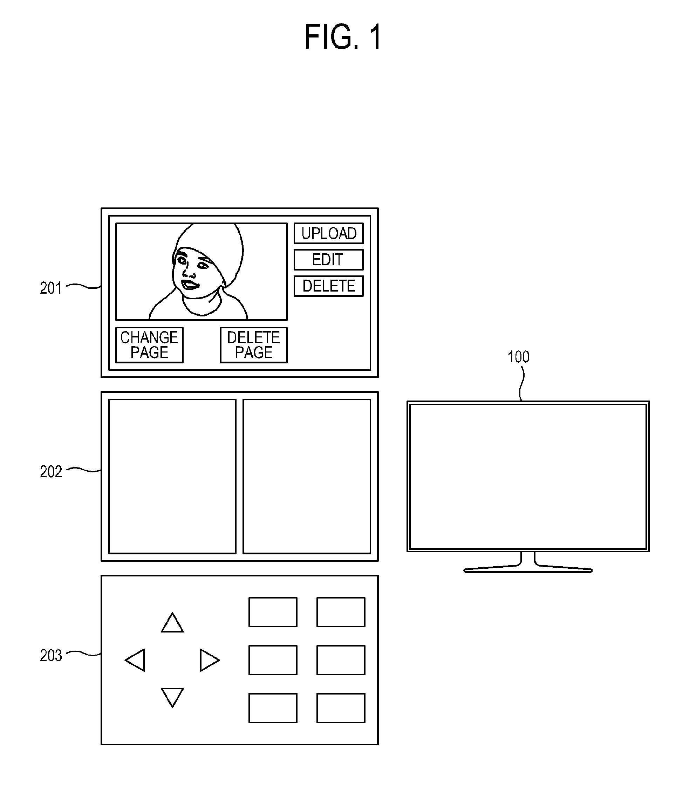

FIG.1 illustrates an example of a display apparatus and a plurality of a control device, briefly.

As shown therein, the display apparatus 100 may be a device which has a display panel to implement an image displaying function and a microprocessor to execute an application program, such a digital TV. Or, the display apparatus 100 may be a device connected to another device such as PC, and display an image generated by an application program executed by another device. This is merely an example and the exemplary embodiments are not limited to this example.

The control device 200 generates and transmits a control signal corresponding to a user's input to the display apparatus 100. A user can select a UI displayed by the display apparatus 100 using the control device 200, and the display apparatus 100 executes a predetermined action corresponding to the selected UI by the control device 200. There may be a plurality example to configure the control device 200. For example, the control device 200 may be configured by a device including a screen for displaying a UI 201, a device including at least one touch panel 202, and a device including a plurality of buttons 203. This is merely an example and the exemplary embodiments are not limited to this example.

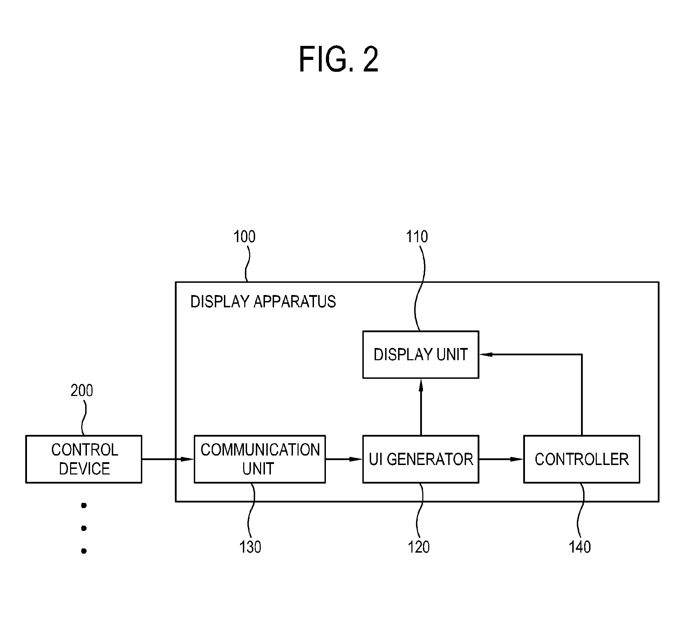

FIG. 2 is a control block diagram of a display apparatus 100 according to an exemplary embodiment.

As shown therein, the display apparatus 100 according to an exemplary embodiment includes a display unit 110, a UI generator 120, a communication unit 130, and a controller 140. The display apparatus 100 may receive a control signal from a plurality of control devices 200 by utilizing known wired or wireless communications. The control signal is used to manipulate a UI displayed in the display apparatus 100.

The display unit 110 may display an image generated by an application program which is being executed. In particular, the display unit displays a UI for operating an application program, and displays various other images based on an internal or an external image source. The display unit 110 may include a display panel (not shown), such as a liquid crystal display (LCD) or a plasma display panel (PDP) for displaying an image. In an exemplary embodiment, a panel driver (not shown) drives the display panel.

The UI generator 120 generates a UI for driving an application program executed by the controller 140 (which will be described later). The generated UI includes a plurality of sub UIs provided in the form of icons or text. Upon selection of a particular sub UI by a user through the control devices 200, an application is operated corresponding to the selected sub UI. That is, each sub UI is generated for a plurality of functions or events for operating the application program executed by the display apparatus 100 through the control devices 200.

The UI generator 120 can include a software or hardware function which generates and controls a UI displayed on the display unit 110, and such a function may be performed by the controller 140. That is, the UI generator 120 does not need to be provided as an additional chipset or as an additional microprocessor.

The communication unit 130 receives a control signal to select a UI from the plurality of control devices 200. The communication unit 130 may include a communication module for performing short-distance wireless communication such as Bluetooth, infrared (IR), ultra wideband (UWB), and Zigbee, or may include a communication port for performing wired communication. The communication unit 130 may be used for various other purposes, such as transmitting and receiving a command for manipulation of a display and data in addition to a control signal for selecting the UI.

In the exemplary embodiment, the control devices 200 generate and transmit a control signal corresponding to a user's input to the display apparatus 100. As a another example, the control devices 200 may include a screen to display a UI thereon. In this case, the display apparatus 100 may transmit predetermined UI data to each of the control devices 200 corresponding to a control grade of the control devices 200 if such a grade is set.

According to an exemplary embodiment, the controller 140 controls the overall operation of the display apparatus 100. The controller 140 may include a control program, a non-volatile memory such as read only memory (ROM) storing a control program therein, and a flash memory. The controller 140 may include volatile memory, such as a random access memory (RAM) to which at least a part of the stored control program is loaded. The controller 140 may also include a microprocessor, such as a central processing unit (CPU), and a micro control unit (MCU), which can execute the loaded control program.

The controller 140 determines whether the control devices 200 which have transmitted the control signal have a control authority to select a UI corresponding to the control signal, based on the control grade of the plurality of control devices 200. According to an exemplary embodiment, a plurality of users may select a UI displayed on the display apparatus 100 through the control devices 200, and thus the same UI or sub UI may be selected by a plurality of users. A repetitive selection of a particular UI by a plurality of users may cause confusion to the execution of an application program. In the case of some UIs, it may be beneficial to grant a control authority to a particular user. Accordingly, each of the control devices 200 is granted the control authority, and only if the control device 200 which has transmitted the control signal has the control authority to select a UI, will the application program be operated according to the transmitted control signal.

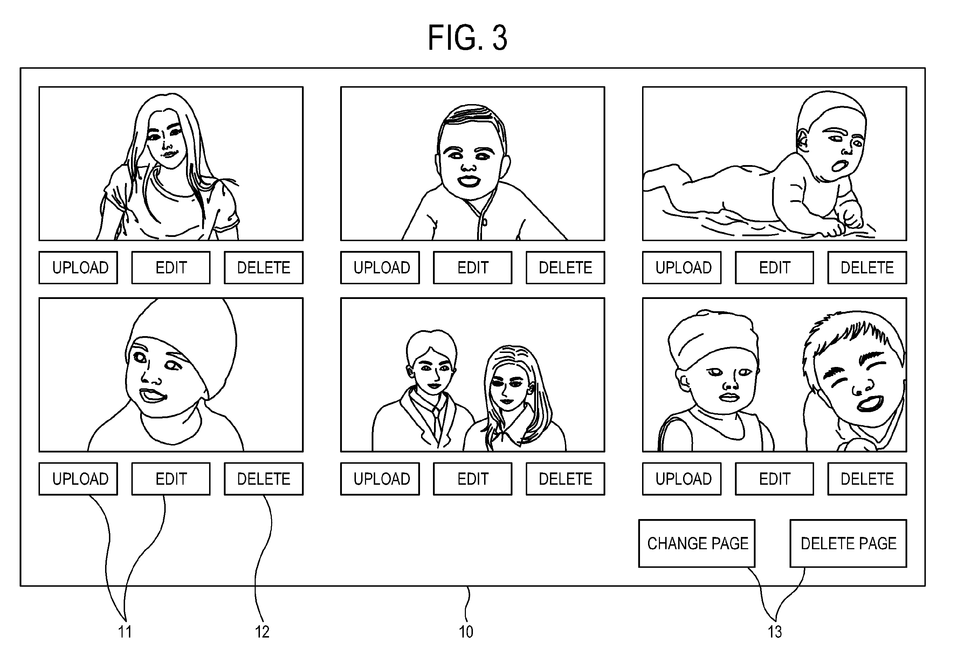

The UI displayed on the display unit 110 may include a plurality of sub UIs, and the control grade granted to the control devices 200 may include control authority information of the sub UIs. The sub UIs are set for each function or event for operating an application program, and thus the control authority is the information on whether the control devices 200 may select the sub UI and perform a corresponding function or event. The sub UIs are displayed in the form of icons or texts. The display of the UI will be described in detail with reference to FIGS. 3 to 5.

If the plurality of control devices 200 are connected to the display apparatus 100 through the communication unit 130, the controller 140 may grant a control grade to each of the control devices 200 and transmit control grade information to the control devices 200 through the communication unit 130. The control grade may be granted according to a connection order of the control devices 200, and may depend on the existence of a platform for providing a UI and a key for using an application program which is being executed. The controller 140 may receive a request for setting the control grade of the connected control devices 200 from one of the plurality of control devices 200, and may set the control grade of the control devices 200 in response to the request. The set control grade, selection of a particular sub UI, or a control authority for a particular activity may be changed upon request from the control devices 200. If there is no control device 200 which may select a particular sub UI, the controller 140 may reset the control grade of the control devices 200.

The controller 140 may transmit UI data corresponding to the control grade, together with the control grade information. If the control devices 200 include a screen to display a UI, the control devices 200 which have received the control grade information and the UI data may display a UI corresponding to the UI data. Upon a change in the control grade of the control devices 200, the UI displayed on the control devices 200 may be updated and displayed. A user may select the UI displayed in the control devices 200, and if a user selects the UI displayed in the control devices 200, the UI displayed in the display apparatus 100 may be changed corresponding to such selection.

If the control devices 200 do not have a function of displaying a UI, the control devices 200 may perform only an operation corresponding to an input of a key or touch pad permitted according to the control grade, even if the display apparatus 100 receives a control signal according to an input of a particular key or touch pad. If the control devices 200 which have transmitted the control signal do not have the control authority to select a particular sub UI, the controller 140 may control the display unit 110 to display on the display unit 110 a predetermined alarm to notify that the control device 200 does not have the control authority to select a particular sub UI.

To transmit UI data, the controller 140 may generate UI data by parsing a UI generated by the UI generator 120. More specifically, if the control grade of the particular control device 200 is granted to select some sub UIs only from generated UIs, the controller 140 may parse the generated UI and may generate UI data defining only sub UIs which can be selected according to the control grade of the control device 200.

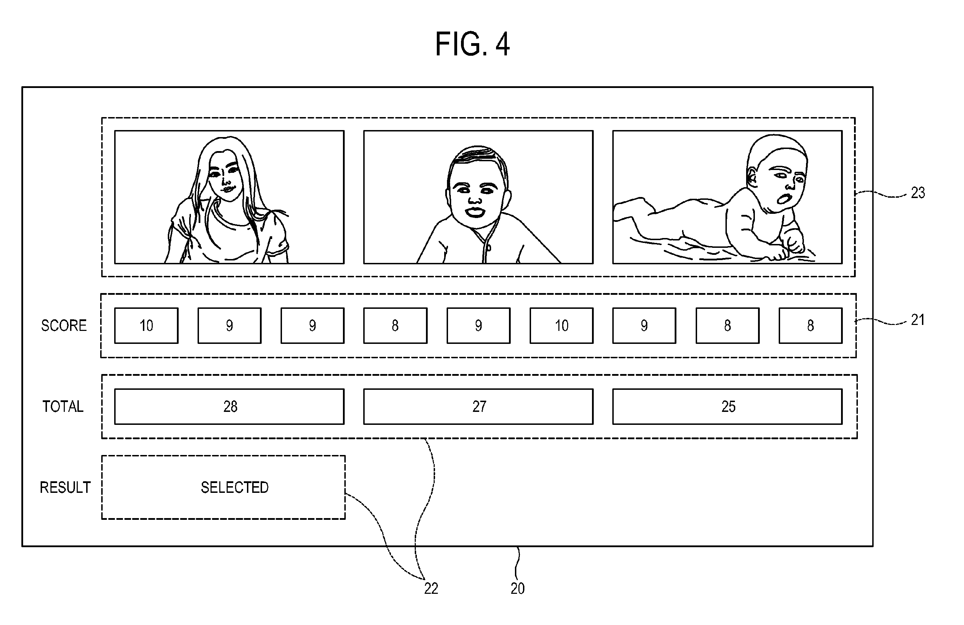

The UI displayed on the display unit 110 may include a common UI which is selectable by all of the plurality of control devices 200 and a private UI which is selectable by one of the plurality of control devices 200. The common UI and the private UI may be displayed in different areas of the display unit 110. Displaying the common UI and the private UI in different areas helps collaboration among a plurality of users, and will be described later with reference to FIG. 4.

The features of an exemplary UI displayed on the display unit 110 will be described with reference to FIGS. 3 and 4. FIG. 3 illustrates a UI 10 which is provided to jointly perform a photo book operation as an example of an application program executed through the display apparatus 100.

As shown in FIG. 3, the UI generator 120 generates the UI 10 for performing the photo book operation. Together with photos, sub UI 11 for uploading and editing and sub UI 12 for deleting, which are example operations which can be performed for each photo, and a sub UI 13 for changing a current page and deleting a current page are displayed.

As described above, the control grade of the control devices 200 may be set for each of sub UI 11, sub UI 12 and sub UI 13. For example, the control grade may be set as three grades. A grade A may be set to select only the sub UI 11 for uploading or editing a photo. A grade B may be set to select the sub UI 12 for deleting a photo as well as for uploading and editing a photo. A grade C may be set to select the sub UI 13 for changing a current page to another page or deleting the entire page. That is, the control grade may be set for each activity of sub UI 11, sub UI 12 and sub UI 13. The control grade means the grade for arbitrarily classifying the sub UIs which are selectable by the control devices 200, and is not interpreted as a senior or subordinate concept for the control authority.

The controller 140 generates UI data defining UIs selectable by the grade A, i.e., UI data defined to select the UI for uploading and editing a photo, with respect to the control device 200 with the grade A, and transmits the UI data to the control device 200 through the communication unit 130. Upon reception of the UI data, the control device 200 may display therein a UI for uploading and editing a photo, and a user may select the sub UI 11 for uploading and editing a photo as displayed in the display apparatus 100, through the UI displayed in the control device 200.

If the control devices 200 include a plurality of keys rather than a screen displaying a UI, each key may correspond to sub UI 11, sub UI 12 and sub UI 13. Even if a user presses a key corresponding to deleting a photo 12 which is not selectable by the grade A, the display apparatus 100 does not delete the photo and may display a predetermined alarm to notify a user that the sub UI may not be selected.

The control devices 200 which have been granted the grades B and C may also receive UI data corresponding to the control grades from the display apparatus 100, and may generate a UI to be displayed in the control devices 200. Accordingly, UI data received and UIs displayed in the control devices 200 may differ according to the control grade.

FIG. 4 illustrates another example of a UI displayed on the display unit 110. FIG. 4 illustrates a group voting service as an application program which is executed.

As shown in FIG. 4, the UI generator 120 may generate a UI 20 for the group voting service, and each user may select one of the photos displayed in the display apparatus 100. The UI generator 120 generates a sub UI 21 for inputting points, a sub UI 22 for summing up the points if all of the points are input and displaying results, and a sub UI 23 for selecting or changing a photo subject to voting. The UI generator 120 displays sub UI 21, sub UI 22 and sub UI 23 on the display unit 110.

Similar to the example shown in FIG. 3, the control grade of the control devices 200 may be set for each of sub UI 21, sub UI 22 and sub UI 23. For example, the grade A may be set to select only the sub UI 21 for inputting points, the grade B may be set to select the sub UI 22 for summing up points and displaying results, and the grade C may be set to select the sub UI 23 for selecting or changing a photo. That is, the control grade may be set for each function or event performed through the sub UIs.

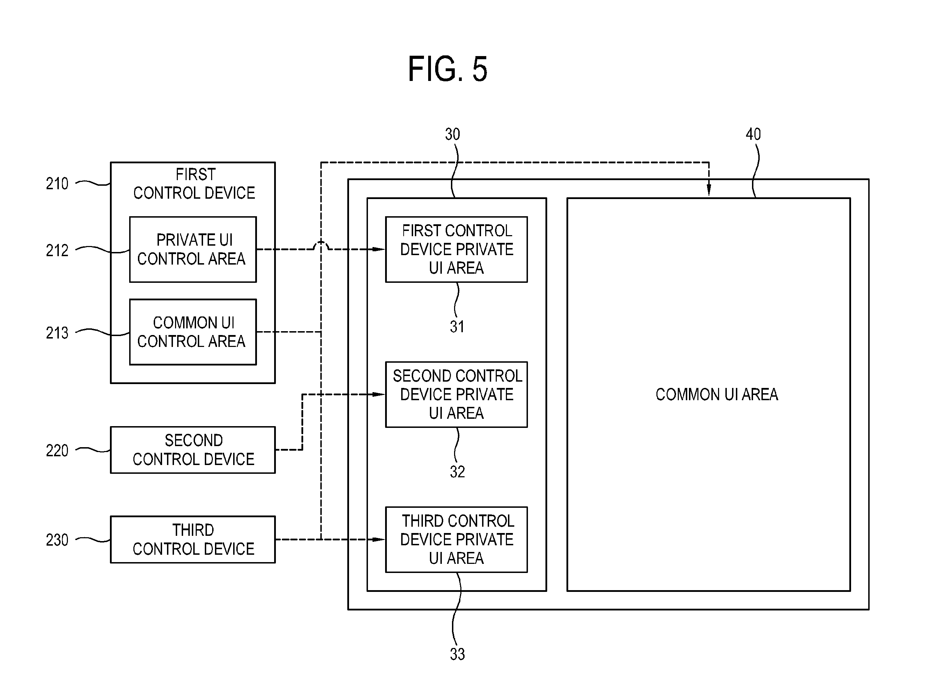

Hereinafter, an exemplary embodiment of a UI including a common UI area 40 and a private UI area 30 will be described with reference to FIG. 5.

As shown in FIG. 5, a UI 10 which is displayed on the display unit 110 of the display apparatus 100 may include a common UI area 40 for all of a plurality of control devices 210, 220 and 230 and a private UI area 30 for each of the plurality of control devices 210, 220 and 230. If three control devices are connected to the display apparatus 100, the private UI area 30 including private UI areas 31, 32 and 33 of the first control device 210, the second control device 220 and the third control device 230, respectively, is displayed. The private UI areas 31, 32 and 33 may be selected by a control signal of the corresponding control devices 210, 220 and 230, and a control device cannot access a private UI area of another control device. For example, even if a user moves a displayed cursor (not shown) through the second control device 220 in the form of a touch pad, the cursor may not be located in the private UI area 31 of the first control device 210, or if the cursor is located therein, the cursor may be set so as not to select a predetermined sub UI within the private UI area 31 of the first control device.

In the exemplary photo book operation in FIG. 3 , a user of a control device may register or edit the uploaded photo through the private UI area 30, register the edited photo with the common UI area 40, or the common UI area 40 may be changed to sync with the private UI area 30 according to a control through the private UI area 30.

The common UI area 40 may be accessed by a plurality of users, and a particular sub UI may be selected according to the control grades, as explained above.

According to an exemplary embodiment, the control devices 210, 220 and 230 may separately include a private UI control area 212 for controlling the private UI area 30 and a common UI control area 213 for controlling the common UI area 40. A user may select the private UI area 30 of the display apparatus 100 through the private UI control area 212, and may select the common UI area 40 of the display apparatus 100 through the common UI control area 213.

The display apparatus 100 may display only the common UI area 40 according to the number of control devices connected to the display apparatus 100 during the performance of the application program, nature of the application program or a user's selection, rather than displaying the private UI area 30.

According to the display apparatus 100 which has been described as above, a plurality of users may select a UI provided by the display apparatus 100 through the control devices based on the control grade. Thus, an environment in which a joint operation is smoothly performed is provided.

FIG. 4 is a flowchart of a method for providing a UI of the display apparatus 100 according to the exemplary embodiment.

The display apparatus 100 according to the exemplary embodiment may display a UI for controlling the executed application program, receive a control signal from the plurality of control devices 200 to select the UI, and operate the application program according to the control signal. As described above, as the same UI or sub UI may be selected by a plurality of users, each of the control devices 200 is granted the control authority. The application program is operated according to the transmitted control signal only if the control device 200 which has transmitted the control signal has the control authority to select the UI.

The display apparatus 100 executes a predetermined application program, and generates and displays a UI for operating the application program (S110). The displayed UI may include a plurality of sub UIs. The UI may include a common UI which is selectable by the plurality of control devices 200, and a private UI which is selectable by one of the plurality of control devices 200. The common UI and the private UI may be displayed in different areas in a screen of the display apparatus 100.

If the control signal is transmitted by the control devices 200 to select the UI (S120), it is determined whether the control device 200 has the control authority to select the UI based on the control grade of the control device 200 (S130). The control grade may be set for each sub UI, and details are the same as those explained above.

If it is determined that the control device 200 has the control authority, the control device 200 operates the application program corresponding to the selected UI according to the control signal (S140).

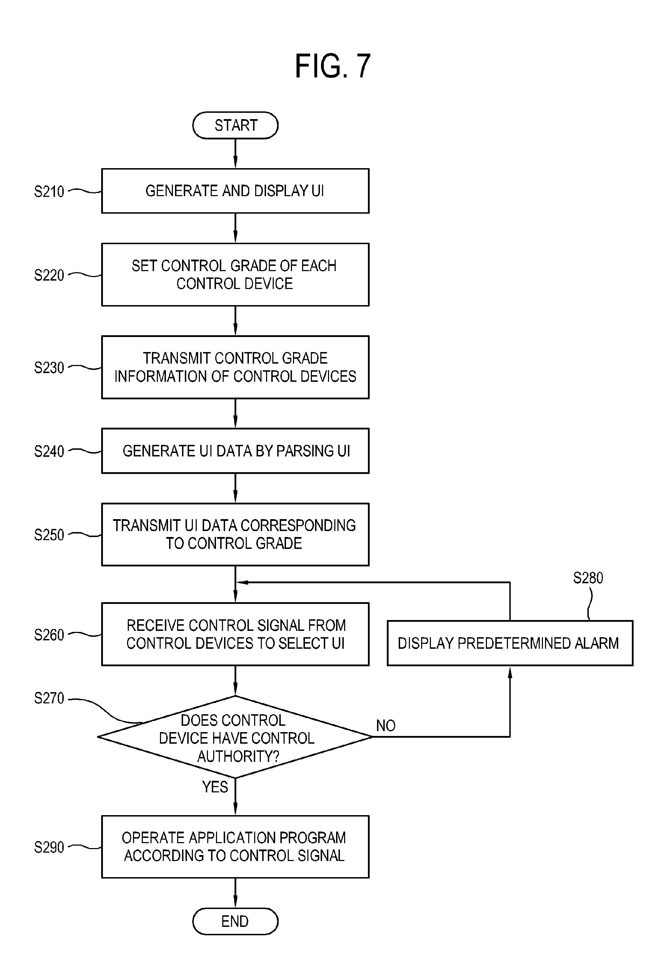

FIG. 7 is another flowchart which illustrates the method for providing the UI of the display apparatus 100 according to an exemplary embodiment, in more detail.

The display apparatus 100 executes a predetermined application program, and generates and displays a UI for operating the application program (S210). If the plurality of control devices 200 are connected to the display apparatus 100, the control grade of each of the control devices 200 is set (S220), and the control grade information is transmitted to each of the control devices 200 (S230). The granting of the control grade may be determined by the connection order of the control devices 200, and may be determined based on an existence of a platform providing a UI, and a key for using the executed application program. Otherwise, if one of the plurality of control devices 200 sends a request for setting the control grade of the connected control devices 200, the control grade of the control devices 200 may be set in response to such request.

The display apparatus 100 may generate UI data corresponding to the control grade (S240), and transmit the UI data to the control devices 200 (S250). The UI generated by the display apparatus 100 may be parsed to generate the UI data of the control devices 200. If the control devices 200 have a screen to display a UI, the control devices 200 which have received the control grade information and the UI data may display a UI corresponding to the UI data, and a user may select the UI displayed in the control devices 200.

If the control signal is transmitted by the control devices 200 to select the UI (S260), it is determined whether the control devices 200 have the control authority to select the UI, based on the control grade of the control devices 200 (S270). If it is determined that the control devices 200 have the control authority, the control devices 200 operate the application program corresponding to the selected UI according to the control signal (S290). If the control devices 200 do not have the control authority, they do not perform the operation corresponding to the control signal, and a predetermined alarm may be displayed to notify a user of the foregoing (S280).

According to the method for providing the UI as explained above, a plurality of users may select the UI provided by the display apparatus 100 through the control devices 200 based on the control grade, and an environment in which a joint operation is smoothly performed is provided.

As described above, a display apparatus and a method for providing a UI thereof according to the exemplary embodiment may provide an environment in which an operation is smoothly performed if a UI provided in the display apparatus is shared by a plurality of control devices.

Although a few exemplary embodiments have been shown and described, it will be appreciated by those skilled in the art that changes may be made in these exemplary embodiments without departing from the principles and spirit of the inventive concept, the range of which is defined in the appended claims and their equivalents.

## Claims

1. A display apparatus comprising:
a display unit;
a user interface (UI) generator which generates a UI to operate an executed application program;
a communication unit which receives a control signal from a control device of a plurality of control devices, wherein each of the plurality of control devices includes a control grade in order to select the UI; and
a controller which determines whether the control device of the plurality of control devices which has transmitted the control signal has a control authority to select the UI, based on the control grade of the control device of the plurality of control devices, and operates the application program according to the control signal if the control device of the plurality of control devices has the control authority.

2. The display apparatus according to claim 1, wherein the UI comprises a plurality of sub UIs corresponding to a predetermined event, and the control grade comprises control authority information with respect to the plurality of sub UIs.

3. The display apparatus according to claim 1, wherein the controller transmits control grade information to the plurality of control devices through the communication unit if the plurality of control devices are connected to the display apparatus.

4. The display apparatus according to claim 3, wherein the controller transmits UI data corresponding to the control grade of each of the plurality of control devices to each of the plurality of control devices, respectively, through the communication unit.

5. The display apparatus according to claim 4, wherein the controller generates UI data corresponding to the control grade of each of the plurality of control devices by parsing the UI.

6. The display apparatus according to claim 1, wherein the controller sets the control grade for each of the plurality of control devices according to a connection order of each of the plurality of control devices.

7. The display apparatus according to claim 1, wherein the controller receives a signal for setting the control grade of a connected control device from one of the plurality of control devices and sets the control grade for each of the plurality of control devices.

8. The display apparatus according to claim 1, wherein the UI comprises a common UI which is selectable by any of the plurality of control devices, and a private UI which is selectable by only one of the plurality of control devices, and
wherein the common UI and the private UI are displayed in different areas of the display unit.

9. A method for providing a user interface (UI) of a display apparatus, the method comprising:
generating and displaying a UI which operates an executed application program;
receiving a control signal from a control device of a plurality of control devices, wherein each of the plurality of control devices includes a control grade in order to select the UI;
determining whether the control device of the plurality of control devices which has transmitted the control signal has a control authority to select the UI, based on the control grade of the control device of the plurality of control devices; and
operating the application program according to the control signal if the control device of the plurality of control devices has the control authority.

10. The method according to claim 9, wherein the UI comprises a plurality of sub UIs corresponding to a predetermined event, and the control grade comprises control authority information for each of the plurality of sub UIs.

11. The method according to claim 9, further comprising transmitting the control grade information to each of the plurality of control devices.

12. The method according to claim 11, further comprising transmitting UI data corresponding to the control grade to each of the plurality of control devices.

13. The method according to claim 9, wherein the display apparatus sets a control grade of each of the plurality of control devices according to a connection order of each of the plurality of control devices.

14. The method according to claim 9, wherein the display apparatus receives a signal to set the control grade of a connected control device from one of the plurality of control devices, and sets the control grade for each of the plurality of control devices according to the signal.

15. The method according to claim 11, wherein the UI comprises a common UI which is selectable by any of the plurality of control devices, and a private UI which is selectable by only one of the plurality of control devices, and
wherein the common UI and the private UI are displayed in different areas of a display.
